(19) Europäisches Patentamt / European Patent Office / Office européen des brevets

(11) **EP 4 571 634 A1**

(12) **EUROPEAN PATENT APPLICATION**

(43) Date of publication:
**18.06.2025   Bulletin 2025/25**

(21) Application number: **24219195.5**

(22) Date of filing: **11.12.2024**

(51) International Patent Classification (IPC):
*G06T 5/60* (2024.01)

(52) Cooperative Patent Classification (CPC):
**G06T 5/60;** G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.12.2023   US 202363608802 P**

(71) Applicant: **Google LLC**
**Mountain View, CA 94043 (US)**

(72) Inventors:
• **TALEBI, Hossein**
  **Mountain View, 94043 (US)**

• **TU, Zhengzhong**
  **Mountain View, 94043 (US)**
• **YE, Keren**
  **Mountain View, 94043 (US)**
• **DELBRACIO, Mauricio**
  **Mountain View, 94043 (US)**
• **MILANFAR, Peyman**
  **Mountain View, 94043 (US)**
• **QI, Chenyang**
  **Mountain View, 94043 (US)**

(74) Representative: **Varley, James Richard et al**
**Venner Shipley LLP**
**200 Aldersgate**
**London EC1A 4HD (GB)**

(54) **PERFORMING IMAGE RESTORATION TASKS USING DIFFUSION NEURAL NETWORKS**

(57)    Methods, systems, and apparatuses, including computer programs encoded on computer storage media, for performing image restoration tasks using a diffusion neural network.

FIG. 1

EP 4 571 634 A1

**Description**

BACKGROUND

This specification relates to generating images using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

SUMMARY

This specification generally describes a system implemented as computer programs on one or more computers in one or more locations that performs image restoration tasks (also referred to as image restoration "procedures") using a diffusion neural network.

Generally, performing "image restoration" refers to recovering details, e.g., pixel-level details, from a degraded image while preserving the original semantic information in the degraded image. In other words, image restoration tasks remove degradation from a degraded image to generate a restored image.

The subject matter described in this specification can be implemented in particular embodiments so as to realize one or more of the following advantages.

Text-driven diffusion models have become increasingly popular for various image editing tasks, including inpainting, stylization, and object replacement. However, these models still struggle with performing more fine-level image processing tasks that require recovering details from a degraded input image. Examples of such tasks include denoising, super-resolution, and deblurring.

This specification describes a generative image restoration technique that uses a diffusion neural network to perform restoration on an input image by using natural language to control the image restoration process. As a result, by processing different text prompts that specify different types of restoration processes, the system can use the same diffusion neural network to accurately perform multiple different restoration tasks. More specifically, users of the system can specify, through the input text prompt, which restoration task should be performed on a given degraded image.

By making use of the described techniques, the system can combine the flexibility of text-based control over the restoration effects with state-of-the-art accuracy on any given one of the restoration tasks.

The details of one or more embodiments of the subject matter of this specification are set forth in the accompanying drawings and the description below.

Other features, aspects, and advantages of the subject matter will become apparent from the description, the drawings, and the claims.

BRIEF DESCRIPTION OF DRAWINGS

FIG. 1 shows an example image restoration system.
FIG. 2 shows an example of different restoration tasks being performed on two different input images.
FIG. 3 is a flow diagram of an example process for generating a restored image from an input image.
FIG. 4 shows an example of the operation of the system when the diffusion neural network includes a base diffusion neural network and an additional diffusion neural network.
FIG. 5 shows an example of generating a training example.
FIG. 6 shows an example of the performance of the described techniques relative to conventional approaches.

Like reference numbers and designations in the various drawings indicate like elements.

DETAILED DESCRIPTION

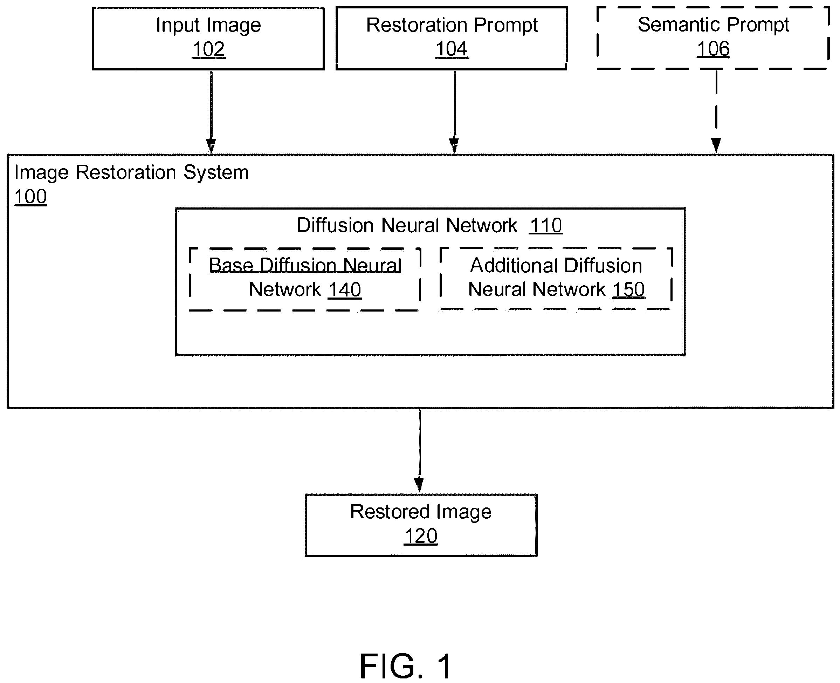

FIG. 1 shows an example image restoration system 100. The image restoration system 100 is an example of a system implemented as computer programs on one or more computers in one or more locations, in which the systems, components, and techniques described below can be implemented.

The system 100 is a system that performs image restoration tasks (also referred to as image restoration "procedures") using a diffusion neural network 110.

Generally, performing "image restoration" refers to recovering details, e.g., pixel-level details, from a degraded image while preserving the original semantic information in the degraded image. In other words, image restoration tasks remove degradation from a degraded image to generate a restored image.

Different image restoration tasks remove different types of degradation from the degraded image.

For example, one restoration task can be to remove all possible degradation from the degraded image.

As another example, another restoration task can denoise the degraded image, i.e., to remove noise from the intensity values of the pixels in the degraded image.

As yet another example, another restoration task can deblur the degraded image, i.e., to remove blurring from the image.

As yet another example, another restoration task can remove compression or other artifacts from the degraded image.

As yet another example, another restoration task can remove two or more types of degradation (while not removing any other types of degradation).

To perform an image restoration task on an input image 102, the system 100 receives the input image 102.

For example, the system 100 can receive the input image 102 from a user or can receive data identifying a resource locator or other identifier for the input image 102 from the user.

The system 100 also obtains a restoration prompt 104 that specifies a restoration procedure to be applied to the input image 102.

That is, the restoration prompt 104 is text that specifies the restoration procedure, e.g., by including the name(s) of the type(s) of degradation to be removed as part of the restoration procedure or by specifying that all degradation should be removed as part of the restoration procedure.

Thus, different restoration prompts 104 can specify different restoration procedures. In other words, the system 104 can perform multiple different restoration tasks (or procedures) on a given input image 102 by being provided a different restoration prompt.

Optionally, the restoration prompt 104 can include one or more numerical values that specify the intensity of the restoration procedure, e.g., a sigma value for a deblurring restoration or a denoising restoration. The sigma value for a given restoration operations defines the strength, i.e., intensity of the operation, e.g., how much noise to remove when performing denoising or how much blurring to remove when performing restoration. When the restoration procedure removes multiple different types of degradation, the numerical values can optionally specify different intensities for the different types of degradation, e.g., one sigma value for deblurring and another, different sigma value for denoising.

Optionally, the system 100 can also obtain, e.g., receive from a user or generate from the input image 102, a semantic prompt 106 that specifies one or more semantic properties of a restored image to be generated from the input image 102.

The system 100 then generates a restored image 120 from the input image 102, the restoration prompt and, optionally, the semantic prompt 106 using the diffusion neural network 110.

More specifically, the system 100 initializes a representation of the restored image 120 and then updates the representation of the restored image 120 to generate a final representation of the restored image 120.

In particular, as part of the updating, the system 100 can, at each of a plurality of sampling iterations, generate a denoising output for the updating iteration using the diffusion neural network 110.

As part of generating the denoising output, the system can process a first diffusion input for the sampling iteration that includes (i) the representation of the restored image 120, (ii) a representation of the input image 102, and (iii) a representation of the restoration prompt 104 using the diffusion neural network 110 to generate a first denoising output. When used, the first diffusion input can also include a representation of the semantic prompt 106.

Generally, the diffusion neural network 110 can be any appropriate diffusion neural network that is configured to receive an input that includes a current (noisy) representation of an image and a conditioning input and to generate a denoising output.

In some implementations, the diffusion neural network 100 performs a diffusion process in output space, e.g., pixel space. In this example the data items ("representations") operated on and generated by the diffusion neural network 110 have values for each pixel that specify color values, e.g., RGB values or another color encoding scheme.

Examples of such diffusion neural networks include Imagen.

In some other implementations, the diffusion neural network 110 performs a diffusion process in latent space, e.g., in a latent space that is lower-dimensional than the output space. That is, the data items ("representations") operated on by the diffusion neural network 110 are latent representations and the values in the representations are learned, latent values, e.g., rather than color values.

Examples of such diffusion neural networks include Stable Diffusion.

As a particular example and as will be described in more detail below, the diffusion neural network 110 can include a base diffusion neural network 140 and an additional diffusion neural network 150, which each receive different parts of the first diffusion input. For example, the base diffusion neural network 140 can receive the representation of the restored image 120 (and, when used, the representation of the semantic prompt 108) while the additional diffusion neural network can receive the representation of the restored image 120, the representation of the restoration prompt 104, and the representation of the input image 102.

In these cases, prior to using the diffusion neural network 110 to perform image restoration, the base diffusion neural network 140 can be pre-trained, e.g., on training data for a text-conditional image generation task, and then held fixed while the additional diffusion neural network 150 is trained on training data for multiple different image restoration tasks.

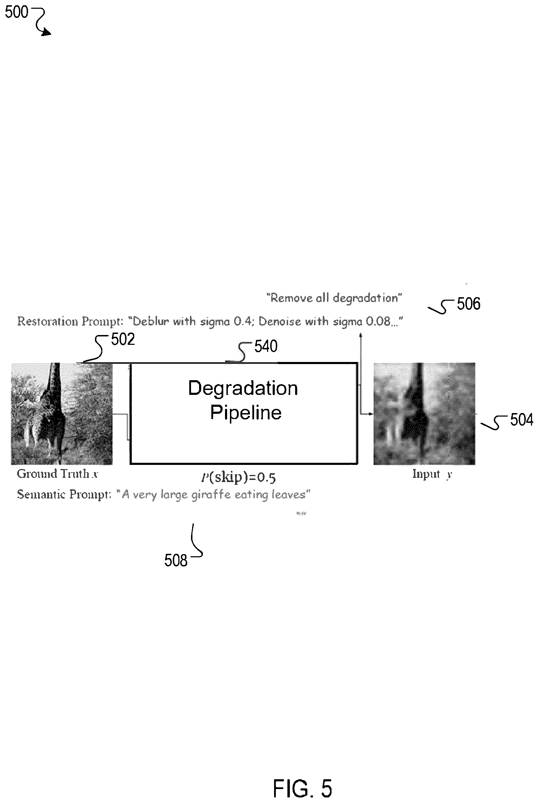

One example of generating the training data for the training of the additional diffusion neural network 150 is described below with reference to FIG. 5.

The system 100 then updates the representation of the restored image 120 using the denoising output.

After the last sampling iteration, the system 100 generates the restored image 120 from the final representation of the restored image 120.

As described above, in any of the above examples, the representations of images received as input by the diffusion neural network 110 and updated using the diffusion neural network 110 can either be representations in the output space, i.e., so that the values in the representation are values of image pixels, or an output data item in a latent space, i.e., so that the values in the representation are values in a latent representation of an image in the output space.

When the representations are in a latent space, the system 100 can generate the restored image 120 in output space by processing the final representation in the latent space using a decoder neural network, e.g., one that has been pre-trained in an auto-encoder framework with an encoder neural network.

During training, the system 100 can use the encoder neural network, e.g., one that has been pre-trained jointly with the decoder in the auto-encoder framework, to encode target images in the output space to generate target representations for the diffusion neural network 110 in the latent space.

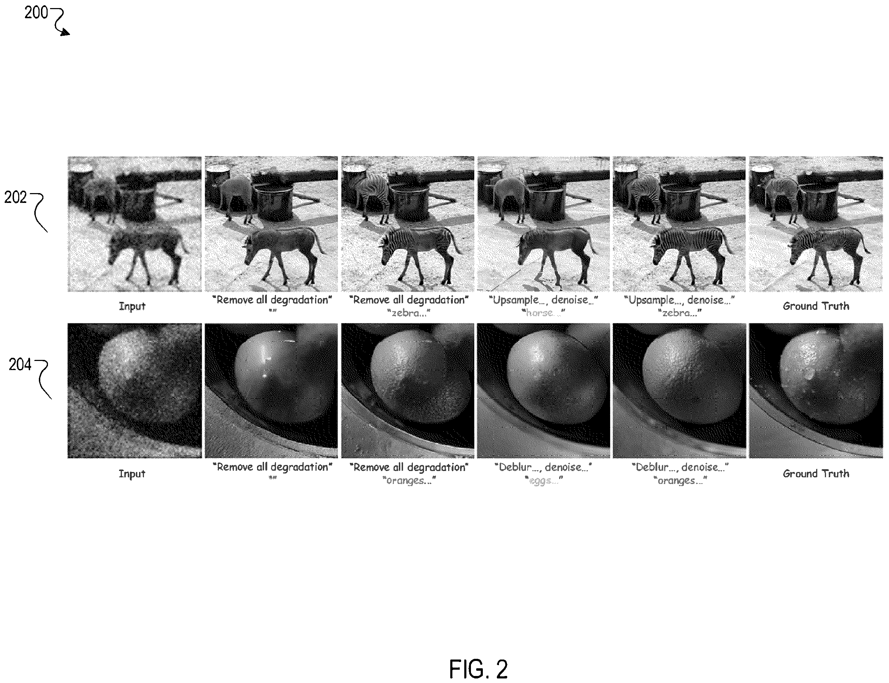

FIG. 2 shows an example 200 of different restoration tasks being performed by the system 100 on two different input images 202 and 204.

In particular, the example 200 shows, for each of the input images 202 and 204, four different restored images generated from the input image 202 using the diffusion neural network 110 and a ground truth restored version of the input image. In particular, each of the four different restored images is generated in response to a respective restoration prompt ("Remove all degradation," "upsample ..., denoise... ," or "deblur ..., denoise... ") that specifies the restoration task to be performed on the corresponding image. Some of the restored images are generated without a semantic prompt (which causes the diffusion neural network to attempt to preserve the original semantics of the input image), while others are generated from both a restoration prompt and a semantic prompt ("zebra" or "horse" or "oranges" or "eggs"), which causes the diffusion neural network 110 to match the semantics of the restored image to the semantics specified by the semantic prompt. As can be seen from the example 200, different combinations of restoration and semantic prompts result in different restored images being generated by the system 100 give the same original, degraded image.

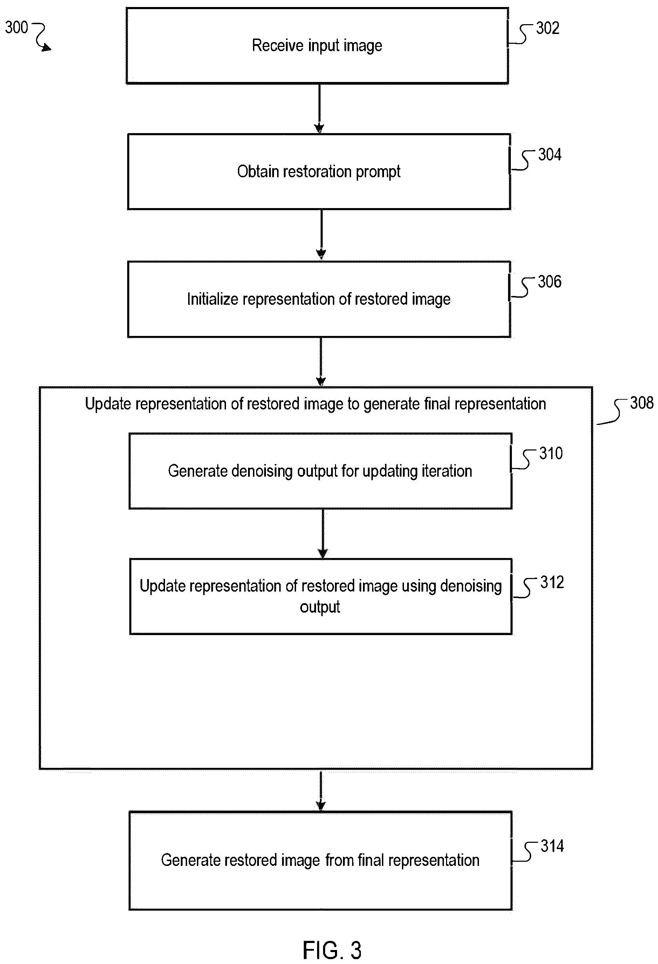

FIG. 3 is a flow diagram of an example process 300 for generating a restored image from an input image. For convenience, the process 300 will be described as being performed by a system of one or more computers located in one or more locations. For example, an image restoration system, e.g., the image restoration system 100 of FIG. 1, appropriately programmed in accordance with this specification, can perform the process 300.

The system receives an input image (step 302). As described above, the input image is generally degraded in one or more respects, e.g., is blurry, noisy, and so on.

The system obtains a restoration prompt that specifies a restoration procedure to be applied to the input image (step 304).

Optionally, the system can also obtain a semantic prompt characterizing one or more semantic properties of the restored image. For example, the system can receive a semantic prompt with the restoration prompt from a user. As another example, the system can apply an image captioner to the input image to generate the semantic prompt.

The system initializes a representation of a restored image (step 306). As described above, depending on whether the sampling performed in latent or in pixel space, the representation can either be a representation in the latent space or in the pixel space. The system can initialize the representation by sampling each value in the representation from a noise distribution, e.g., a Gaussian distribution or other appropriate noise distribution.

The system then updates the representation of the restored image to generate a final representation of the restored image (step 308).

In particular, as part of the updating, the system can, at each of a plurality of sampling iterations, generate a denoising output for the updating iteration (step 310).

Generally, the denoising output defines an estimate of the noise component of the representation as of the sampling iteration, i.e., of the noise that has been added to a ground truth representation of the ground truth restored image to generate the representation.

For example, the denoising output can be a prediction of the noise component.

As another example, the denoising output can be an estimate of the ground truth representation.

As another example, the denoising output can be an estimate of a v-parameterization (Salimans and Ho arXiv: 2202.00512, 2022, section 4; Appendix D) or another appropriate parameterization between the ground truth representation and the noise component.

As part of generating the denoising output, the system can process a first diffusion input for the sampling iteration that includes (i) the representation of the restored image, (ii) a representation of the input image, and (iii) a representation of the restoration prompt using the diffusion neural network to generate a first denoising output. When used, the first diffusion input can also include a representation of the semantic prompt.

In other words, prior to performing the sampling iterations, the system processes the input image to generate a representation of the input image. In particular, the system generates the representation of the input image by processing the input image using an image encoder neural network. This image encoder neural network is generally different from the image encoder neural network that is used during training of the diffusion neural network when the sampling process is performed in the latent space.

The system also processes the restoration prompt to generate a representation of the restoration prompt. The representation generally includes a set of embeddings. In particular, the system generates the representation by processing the restoration prompt using a text embedding neural network. Thus, when the restoration prompt specifies the strength of a given restoration procedure, the tokens representing the strength of the procedure can both be incorporated as context for the embeddings in the representation of the restoration prompt.

When the semantic prompt is used, the system also processes the semantic prompt to generate a representation of the semantic prompt. In particular, the system generates the representation by processing the semantic prompt using a text embedding neural network. This text embedding neural network can be the same neural network or a different neural network from the text embedding neural network that is used to generate the representation of the restoration prompt.

As indicated above, in some cases the diffusion neural network includes a base diffusion neural network and an additional diffusion neural network, which each receive different parts of the first diffusion input. For example, the base diffusion neural network can receive the representation of the restored image (and, when used, the semantic prompt) while the additional diffusion neural network can receive the representation of the restored image, the representation of the restoration prompt, and the input image.

In some implementations, the system uses the first denoising output as the denoising output.

In some other implementations, the system also processes a second diffusion input for the sampling iteration that includes the representation of the restored image using the diffusion neural network to generate a second denoising output. This second diffusion input is generally an "unconditional" input that does not include one or more of: the representation of the input image, the representation of the restoration prompt, or the representation of the semantic prompt.

The system can then generate the denoising output using the first denoising output and the second denoising output. As a particular example, the system can generate a final denoising output by combining the first denoising output and the second denoising output in accordance with a classifier-free guidance weight for the sampling iteration. For example, the system can set the final denoising output equal to (1+w) * the first denoising output - w*the additional denoising output, where w is the guidance weight. The guidance weights for the iterations can be received as input by the system.

The system then updates the representation of the restored image using the denoising output (step 312).

For example, at each iteration other than the last, the system can generate an estimate of the representation using the denoising output and then apply a diffusion sampler to the estimate.

For example, when the denoising output is an estimate of the noise component, the system can generate the estimate of the representation of the input image from the current representation $z_t$ in accordance with a noise level $\bar{\alpha}_t$ for the iteration.

For example, the estimate $f_\theta(z_t, t, c)$ can satisfy:

$$f_\theta(z_t, t, c) = \frac{z_t - \sqrt{1 - \bar{\alpha}_t} \epsilon_\theta(z_t, t, c)}{\sqrt{\bar{\alpha}_t}}.$$

where c is the conditioning input that includes the restoration prompt and, optionally, the semantic prompt, and $\varepsilon_\theta(z_t, t, c)$ is the denoising output.

That is, each iteration $t$ is associated with a noise level $\bar{\alpha}_t$. For example, the noise level can be a function of the iteration $t$, i.e., so that different iterations have different noise levels. Examples of such functions include a linear function, a cosine function, and a sigmoid function. In other words, as the iterations progress, the noise level is adjusted according to a "schedule."

When the denoising output is an estimate of the representation, the system can set the initial estimate equal to the denoising output.

The system can use any appropriate diffusion sampler to update the representation, e.g., the DDPM (Denoising Diffusion Probabilistic Model) sampler, the DDIM (Denoising Diffusion Implicit Model) sampler or another appropriate sampler, to the estimate to generate the updated current data item. DDPMs are, for example, discussed in Ho et al. arXiv:2006:11239.

For the last iteration, the estimate can be the updated representation or the system can use the sampler.

After the last sampling iteration, the system generates the restored image from the final representation of the restored image (step 314). When the representations are in a latent space, the system can generate the restored image in output space by processing the final representation in the latent space using a decoder neural network, e.g., one that has been pre-trained in an autoencoder framework with an encoder neural network. When the representations are in the pixel space, the system can use the final representation as the restored image.

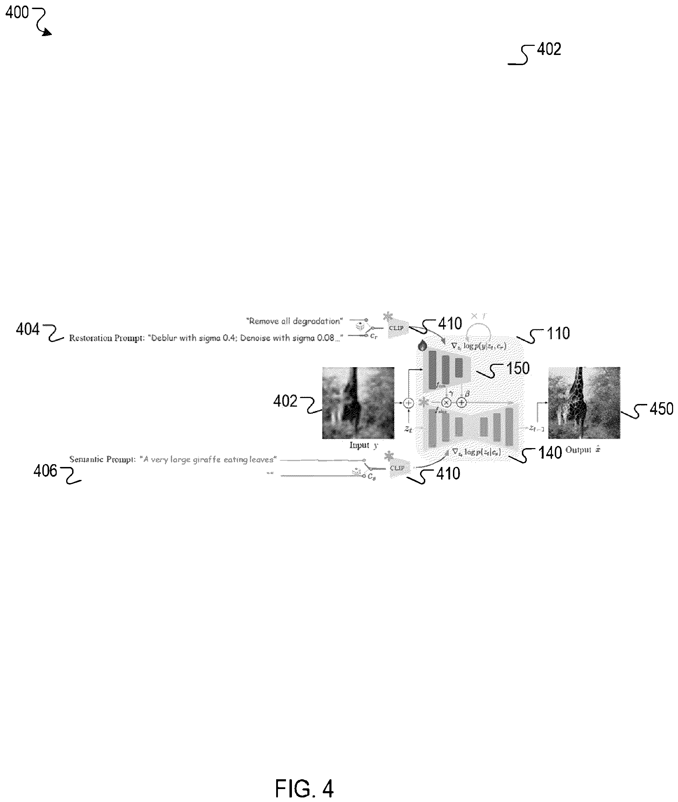

FIG. 4 shows an example 400 of the operation of the system when the diffusion neural network 110 includes a base diffusion neural network 140 and an additional diffusion neural network 150.

As shown in the example 400, the system receives an input image 402, which is a blurry image of a portion of a giraffe, and generates an output restored image 450, which is a restored image of the giraffe.

The system also receives a restoration prompt 404. In particular, the example 400 shows two examples of restoration prompts 404: "Remove all degradation" and "Deblur with sigma .4; Denoise with sigma .08."

The system processes the restoration prompt 404 using a text embedding neural network 410 to generate a representation of the restoration prompt 404.

The system can also optionally receive a semantic prompt 406. In particular, the example 400 shows two examples of semantic prompts 406: "A very large giraffe eating leaves" and "" which indicates that no semantic prompt has been received, i.e., that the semantic prompt is "empty." Deblur with sigma .4; Denoise with sigma .08."

When received, the system processes the semantic prompt 406 using the text embedding neural network 410 to generate a representation of the semantic prompt 406. When no semantic prompt is received, the system uses a default representation of the empty semantic prompt.

In the example 400, the semantic and restoration prompts are both embedded using the same text embedding neural network 410. More generally, however, the text embedders used for the semantic and restoration prompts can be the same or different.

The system initializes a representation z of the restored image and then, at each of a plurality of sampling iterations t, updates the representation of the restored image to generate a final representation of the restored image. That is, at sampling iteration t, the system processes the representation $z_t$ as of the iteration $t$ to generate an updated representation $z_{t-1}$.

As part of generating the denoising output, the system can process a first diffusion input for the sampling iteration that includes (i) the representation of the restored image, (ii) a representation of the input image, (iii) a representation of the restoration prompt using the diffusion neural network to generate a first denoising output, and (iv) the representation of the semantic prompt using the diffusion neural network to generate a first denoising output.

As indicated above, the base diffusion neural network 140 and the additional diffusion neural network 150 each receive different parts of the first diffusion input.

For example, as shown in the example 400, the base diffusion neural network 140 can receive the representation $z_t$ of the restored image and the representation of the semantic prompt while the additional diffusion neural network 150 can receive the representation of the restored image $z_t$, the representation of the restoration prompt, and the representation of the input image.

More specifically, at each sampling iteration, the base diffusion neural network 140 includes a plurality of base neural network layers that each receive a respective base layer input generated from a respective base layer output of a respective other base neural network layer of the base diffusion neural network. For example, as shown in the example 400, the base diffusion neural network includes a sequence of base neural network layers.

The base diffusion neural network 140, at each sampling iteration, is configured to receive a base diffusion input that includes the representation of the restored image and to process the representation to generate the first denoising output. As shown in the example 400, the base diffusion input can also include the representation of the semantic prompt. In this case, the base diffusion input does not include the representation of the input image or of the restoration prompt. For example, the base diffusion input can include the representation of the restored image at the first layer of the base neural network and the base diffusion neural network can be conditioned on the representation of the semantic prompt at one or more intermediate layers of the neural network. An example of this is described below.

The additional diffusion neural network 150, at each sampling iteration, is configured to receive an additional diffusion input that includes the representation of the restored image, the representation of the restoration prompt, and the representation of the input image, and to process the additional diffusion input through a plurality of additional neural network layers to generate a respective additional layer output for each additional neural network layer. In this case, the additional diffusion input does not include the representation of the semantic prompt. For example, the additional diffusion input can include a concatenation of the representation of the restored image and the representation of the input image at the first layer of the additional neural network and the additional diffusion neural network can be conditioned on the representation of the restoration prompt at one or more intermediate layers of the neural network. An example of this is described below.

To condition the base diffusion neural network 140 on the processing of the additional diffusion neural network 150, for one or more particular base neural network layers of the base neural network layers, in the base diffusion neural network 140, the respective base layer input for the particular base neural network layer is generated from the respective base layer output of the respective other base neural network layer and from a respective additional layer output of a corresponding additional neural network layer. Thus, as shown in the example 400, some of the base neural network layers receive input from both another base neural network layer and from an additional neural network layer from the additional diffusion neural network 150.

The input for a given one of these particular base neural network layers can be generated in any of a variety of ways.

For example, for each of the one or more particular base neural network layers, the respective base layer input can be a linear combination of the respective base layer output of the respective other base neural network layer and the respective additional layer output of the corresponding additional neural network layer. The weights in the linear combination can be pre-determined or can be learned during the training of the diffusion neural network on the image restoration tasks.

As another example, the diffusion neural network can also include a respective fusion layer for each of the particular base neural network layers that is configured to generate the input for the particular base neural network layer from respective base layer output of the respective other base neural network layer and the respective additional layer output of the corresponding additional neural network layer.

As a particular example, the fusion layer can be configured to process the respective additional layer output of the corresponding additional neural network layer to generate one or more transformation parameters for the particular base neural network layer. For example, the fusion layer can be a convolutional layer, e.g., a 1x1 convolution layer.

For example, as shown in the example 400, the transformation parameters can be a scaling parameter $\gamma$ and a bias parameter $\beta$.

Then, the fusion layer or, more generally, the diffusion neural network can generate the respective base layer input by applying the one or more transformation parameters for the particular base neural network layer to the respective base layer output of the respective other base neural network layer. Thus, in this example, the respective additional layer output of the corresponding additional neural network layer is used to determine how to transform the respective base layer output of the respective other base neural network layer.

Thus in the example shown in example 400 where the transformation parameters can be a scaling parameter $\gamma$ and a bias parameter $\beta$, the base layer input $f$ can be represented as:

$$ f = (1 + \gamma)f_{out} + \beta, $$

where $f_{out}$ is the respective base layer output of the respective other base neural network layer.

As a particular example, both the base diffusion neural network and the additional neural network can include a sequence of neural network blocks, each of which update the current representation and at least some of which are conditioned on the respective conditioning inputs. As one example, each neural network block can include one or more convolutional layers, one or more self-attention layers, or both. To condition on a conditioning input, a given block can include a cross-attention layer that cross-attends into the representation of the conditioning input.

In this example, the "particular" base neural network layers that have corresponding additional neural network layers can be the first layers in one or more of the neural networks in the base neural network. For each of the "particular" base neural networks, the corresponding additional neural network layer can be the layer that generates the output of the preceding neural network block in the additional neural network. As a particular example, when the sequence includes N blocks the particular base neural network layers can be the first layers of the last $k$ blocks, where $k$ is less than $N$. As another particular example, the particular base neural network layers can be the first layers of every $N/j$-th block in the sequence.

As described above, when the diffusion neural network includes both the base diffusion neural network and the additional diffusion neural network, the base diffusion neural network can be pre-trained, e.g., on training data for a text-conditional image generation task, and then held fixed while the additional diffusion neural network is trained on training data for multiple different image restoration tasks. In other words, the diffusion neural network has been trained on training data for a plurality of image restoration tasks to (i) train the additional diffusion neural network while (ii) keeping the base diffusion neural network fixed.

In these cases, the image encoder neural network used to generate the representation of the input image can be trained jointly with the diffusion neural network on the training data for the plurality of image restoration tasks.

Similarly, when the fusion layers are included in the diffusion neural network, the respective fusion layers can have also been trained jointly with the diffusion neural network on the training data for the plurality of image restoration tasks.

Generally, the training data for the multiple different image restoration tasks includes multiple training examples that each include (i) a training degraded image, (ii) a training restoration prompt, and (iii) a ground truth image generated by applying the restoration represented by the training restoration prompt to the training degraded image. Optionally, the training examples can each also include (iv) a semantic prompt.

In some cases, the system generates the training examples for use in this training to ensure that the examples cover a diverse range of different restoration tasks and that sufficient training examples for each of the tasks are available.

FIG. 5 shows an example 500 of generating a training example.

As shown in the example 500, the system receives a ground truth image 502.

The system then processes the ground truth image 502 to generate an input, degraded image 504, a restoration prompt 506, and a semantic prompt 508.

The system can then generate a training example that includes the degraded image 504, the restoration prompt 506, the semantic prompt 508, and the ground truth image 502. For example, the semantic prompt 508 can be obtained by the system along with the ground truth image 502 or generated by the system by applying an image captioner to the ground truth image 502.

The system can apply a synthetic degradation pipeline 540 to the ground truth image 502 to generate the degraded image 504 and the restoration prompt 506.

In particular, the system maintains a set of image degradations and a respective text description of each degradation that identifies the restoration procedure that would recover the original image prior to applying the degradation.

The set of image degradations can include one or more instances of any one or more of the following: a blur operation, a resize operation, a noise operation, a lossy compression and reconstruction operation, and so on.

When applying the pipeline, the system can determine to apply or skip each degradation in the pipeline, i.e., in the sequence, with a specified probability.

In response to determining to apply a degradation, the system applies the degradation and then adds the description for the degradation to the restoration prompt 506.

When the user can specify in the restoration prompt 506 the strength of any given restoration, the system also selects, e.g., by sampling from a distribution over a set of possible strengths, a strength for the degradation operation and adds a description of the corresponding restoration strength to the restoration prompt 506.

In some cases, the system can run the synthetic degradation pipeline 540 multiple times on the same ground truth image 502 to generate multiple different training examples that have multiple different degraded images generated from the same ground truth image 502.

To train the additional diffusion neural network on a given training example, the system can sample a noise level and sample noise from the noise distribution. The system can then combine the ground truth image with the sampled noise in accordance with the noise level to generate a noisy representation. When the diffusion neural network operates in the latent space, the system can first encode the ground truth image using the encoder before combining with the noise.

The system can then generate a denoising output from the noisy representation, the degraded image in the training example, and the prompt(s) in the training example.

The system can then train the additional diffusion neural network to minimize an error between the denoising output and a ground truth denoising output generated from the ground truth image, the sampled noise, or both.

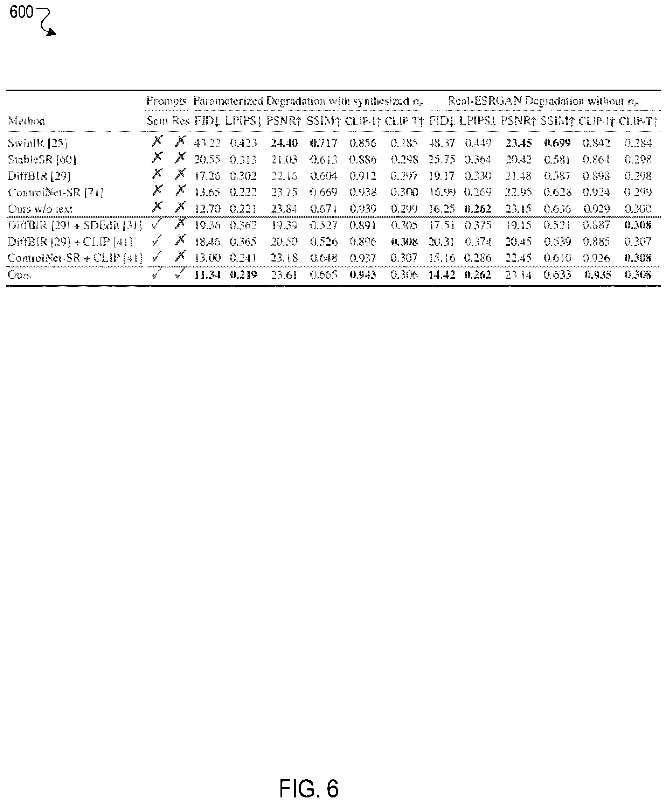

FIG. 6 shows an example 600 of the performance of the described techniques relative to conventional approaches.

In particular, the example 600 shows the quantitative results on the MS-COCO dataset using parameterized degradation (left) and Real-ESRGAN degradation (right) of the described techniques ("ours") relative to conventional techniques. That is, the left results are on parameterized restoration tasks that require for any given removing only one or more specific types of degradation. The right results are on blind restoration tasks that require removing all degradation from an input image.

For each technique, the example 600 also denote the prompt choice at test time, where 'Sem' stands for semantic prompt and 'Res' stands for restoration prompt.

As can be seen from the Figure, the described techniques outperform all baseline techniques on both FID and LPIPs on both datasets.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are correspond toed in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes correspond toed in the accompanying figures do not necessarily require the particular order shown, or sequential order, to achieve desirable results. In some cases, multitasking and parallel processing may be advantageous.

This specification also includes the following clauses:

Clause 1: A method performed by one or more computers, the method comprising: receiving an input image; obtaining a restoration prompt that specifies a restoration procedure to be applied to the input image; initializing a representation of a restored image; updating the representation of the restored image to generate a final representation of the restored image, the updating comprising, at each of a plurality of sampling iterations: generating a denoising output for the sampling iteration, comprising processing a first diffusion input for the sampling iteration that comprises (i) the representation of the restored image, (ii) a representation of the input image, and (iii) a representation of the restoration prompt using a diffusion neural network to generate a first denoising output; and updating the representation of the restored image using the denoising output; and generating a restored image from the final representation of the restored image.

Clause 2: The method of any preceding clause, wherein the restoration prompt specifies that the restoration procedure removes all degradation in the input image.

Clause 3: The method of clause 1, wherein the restoration prompt specifies that the restoration procedure removes one or more specific types of degradation from the input image.

Clause 4: The method of clause 3, wherein the restoration prompt includes one or more numeric values that specify an intensity of the restoration procedure.

Clause 5: The method of any preceding clause, further comprising: generating the representation of the restoration prompt by processing the restoration prompt using a first text embedding neural network.

Clause 6: The method of any preceding clause, wherein the representation of the restored image and the representation of the input image are respective latent representations in a latent space.

Clause 7: The method of clause 6, further comprising: generating the representation of the input image by processing the input image using an image encoder neural network.

Clause 8: The method of clause 6 or clause 7, wherein generating a restored image from the final representation of the restored image comprises: processing the final representation of the restored image using an image decoder neural network to generate the restored image.

Clause 9: The method of any preceding clause, further comprising: receiving a semantic prompt characterizing one or more semantic properties of the restored image, wherein the first diffusion input further comprises a representation of the semantic prompt.

Clause 10: The method of clause 9, further comprising: generating the representation of the semantic prompt by processing the semantic prompt using a second text embedding neural network.

Clause 11: The method of any preceding clause, wherein: the diffusion neural network comprises a base diffusion neural network and an additional diffusion neural network; the base diffusion neural network, at each sampling iteration, is configured to receive a base diffusion input comprising the representation of the restored image and to process the representation of the restored image to generate the first denoising output; the base diffusion neural network comprises a plurality of base neural network layers that each receive a respective base layer input generated from a respective base layer output of a respective other base neural network layer of the base diffusion neural network; the additional diffusion neural network, at each sampling iteration, is configured to receive an additional diffusion input comprising the representation of the restored image, the representation of the restoration prompt, and the representation of the input image, and to process the additional diffusion input through a plurality of additional neural network layers to generate a respective additional layer output for each additional neural network layer; and for one or more particular base neural network layers of the base neural network layers, the respective base layer input for the particular base neural network layer is generated from the respective base layer output of the respective other base neural network layer and from a respective additional layer output of a corresponding additional neural network layer.

Clause 12: The method of clause 10, wherein, for each of the one or more particular base neural network layers, the respective base layer input is a linear combination of the respective base layer output of the respective other base neural network layer and the respective additional layer output of the corresponding additional neural network layer.

Clause 13: The method of clause 11, wherein: the diffusion neural network further comprises a respective fusion layer for each of the particular base neural network layers that is configured to process the respective additional layer output of the corresponding additional neural network layer to generate one or more transformation parameters for the particular base neural network layer, and for each of the one or more particular base neural network layers, the respective base layer input is generated by applying the one or more transformation parameters for the particular base neural network layer to the respective base layer output of the respective other base neural network layer.

Clause 14: The method of clause 13, wherein the one or more transformation parameters comprise a scaling parameter and a bias parameter.

Clause 15: The method of any one of clauses 11-14, when dependent on clause 9, wherein the base diffusion neural network input comprises the representation of the semantic prompt.

Clause 16: The method of clause 15, wherein the additional diffusion neural network input does not include the representation of the semantic prompt.

Clause 17: The method of any one of clauses 11-16, wherein the base diffusion neural network input does not include the representation of the input image or the representation of the restoration prompt.

Clause 18: The method of any one of clauses 11-17, wherein the diffusion neural network has been trained on training data for a plurality of image restoration tasks to (i) train the additional diffusion neural network while (ii) keeping the base diffusion neural network fixed.

Clause 19: The method of clause 18, when dependent on clause 7, wherein the image encoder neural network has been trained jointly with the diffusion neural network on the training data for the plurality of image restoration tasks.

Clause 20: The method of clause 18 or 19, when dependent on clause 13, wherein the respective fusion layers have been trained jointly with the diffusion neural network on the training data for the plurality of image restoration tasks.

Clause 21: The method of any preceding clause, wherein generating a denoising output for the sampling iteration comprises: processing a second diffusion input for the sampling iteration that comprises the representation of the restored image using the diffusional neural network to generate a second denoising output; and generating the denoising output using the first denoising output and the second denoising output.

Clause 22: The method of clause 21, wherein generating the denoising output using the first denoising output and the second denoising output comprises: generating a final denoising output by combining the first denoising output and the second denoising output in accordance with a classifier-free guidance weight for the sampling iteration.

Clause 23: A system comprising one or more computers and one or more storage devices storing instructions that are operable, when executed by the one or more computers, to cause the one or more computers to perform the operations of the respective method of any preceding clause.

Clause 24: A computer storage medium encoded with instructions that, when executed by one or more computers, cause the one or more computers to perform the operations of the respective method of any preceding clause.

What is claimed is:

## Claims

1.    A method performed by one or more computers, the method comprising:

receiving an input image;

obtaining a restoration prompt that specifies a restoration procedure to be applied to the input image;

initializing a representation of a restored image;

updating the representation of the restored image to generate a final representation of the restored image, the updating comprising, at each of a plurality of sampling iterations:

generating a denoising output for the sampling iteration, comprising processing a first diffusion input for the sampling iteration that comprises (i) the representation of the restored image, (ii) a representation of the input image, and (iii) a representation of the restoration prompt using a diffusion neural network to generate a first denoising output; and

updating the representation of the restored image using the denoising output; and

generating a restored image from the final representation of the restored image.

2. The method of claim 1, wherein the restoration prompt specifies that the restoration procedure removes all degradation in the input image.

3. The method of claim 1, wherein the restoration prompt specifies that the restoration procedure removes one or more specific types of degradation from the input image, optionally, wherein the restoration prompt includes one or more numeric values that specify an intensity of the restoration procedure.

4. The method of any preceding claim, further comprising:
generating the representation of the restoration prompt by processing the restoration prompt using a first text embedding neural network.

5. The method of any preceding claim, wherein the representation of the restored image and the representation of the input image are respective latent representations in a latent space, optionally wherein the method further comprises:
generating the representation of the input image by processing the input image using an image encoder neural network.

6. The method of claim 5, wherein generating a restored image from the final representation of the restored image comprises:
processing the final representation of the restored image using an image decoder neural network to generate the restored image.

7. The method of any preceding claim, further comprising:
receiving a semantic prompt characterizing one or more semantic properties of the restored image, wherein the first diffusion input further comprises a representation of the semantic prompt, optionally wherein the method further comprises:
generating the representation of the semantic prompt by processing the semantic prompt using a second text embedding neural network.

8. The method of any preceding claim, wherein:

the diffusion neural network comprises a base diffusion neural network and an additional diffusion neural network,
the base diffusion neural network, at each sampling iteration, is configured to receive a base diffusion input comprising the representation of the restored image and to process the representation of the restored image to generate the first denoising output,
the base diffusion neural network comprises a plurality of base neural network layers that each receive a respective base layer input generated from a respective base layer output of a respective other base neural network layer of the base diffusion neural network,
the additional diffusion neural network, at each sampling iteration, is configured to receive an additional diffusion input comprising the representation of the restored image, the representation of the restoration prompt, and the representation of the input image, and to process the additional diffusion input through a plurality of additional neural network layers to generate a respective additional layer output for each additional neural network layer, and
for one or more particular base neural network layers of the base neural network layers, the respective base layer input for the particular base neural network layer is generated from the respective base layer output of the respective other base neural network layer and from a respective additional layer output of a corresponding additional neural network layer.

9. The method of claim 8, wherein, for each of the one or more particular base neural network layers, the respective base layer input is a linear combination of the respective base layer output of the respective other base neural network layer and the respective additional layer output of the corresponding additional neural network layer; or
wherein:

the diffusion neural network further comprises a respective fusion layer for each of the particular base neural network layers that is configured to process the respective additional layer output of the corresponding additional neural network layer to generate one or more transformation parameters for the particular base neural network layer, and

for each of the one or more particular base neural network layers, the respective base layer input is generated by applying the one or more transformation parameters for the particular base neural network layer to the respective base layer output of the respective other base neural network layer.

10. The method of any one of claims 8-9, wherein the diffusion neural network has been trained on training data for a plurality of image restoration tasks to (i) train the additional diffusion neural network while (ii) keeping the base diffusion neural network fixed.

11. The method of claim 10, when dependent on claim 5, wherein the image encoder neural network has been trained jointly with the diffusion neural network on the training data for the plurality of image restoration tasks.

12. The method of claim 10 or 11, when dependent on claim 9, wherein the respective fusion layers have been trained jointly with the diffusion neural network on the training data for the plurality of image restoration tasks.

13. The method of any preceding claim, wherein generating a denoising output for the sampling iteration comprises:

processing a second diffusion input for the sampling iteration that comprises the representation of the restored image using the diffusional neural network to generate a second denoising output; and
generating the denoising output using the first denoising output and the second denoising output, optionally wherein generating the denoising output using the first denoising output and the second denoising output comprises:
generating a final denoising output by combining the first denoising output and the second denoising output in accordance with a classifier-free guidance weight for the sampling iteration.

14. A system comprising one or more computers and one or more storage devices storing instructions that are operable, when executed by the one or more computers, to cause the one or more computers to perform the operations of the respective method of any preceding claim.

15. A computer storage medium encoded with instructions that, when executed by one or more computers, cause the one or more computers to perform the operations of the respective method of any of claims 1 to 13.

Input Image
102

Restoration Prompt
104

Semantic Prompt
106

Image Restoration System
100

Diffusion Neural Network 110

Base Diffusion Neural Network 140

Additional Diffusion Neural Network 150

Restored Image
120

FIG. 1

EP 4 571 634 A1

FIG. 2

300

```
┌─────────────────────────────────────────────────────┐
│                                                       │
│              Receive input image              ⌐ 302   │
│                                                       │
└─────────────────────────────────────────────────────┘
                         │
                         ▼
┌─────────────────────────────────────────────────────┐
│                                                       │
│            Obtain restoration prompt          ⌐ 304   │
│                                                       │
└─────────────────────────────────────────────────────┘
                         │
                         ▼
┌─────────────────────────────────────────────────────┐
│                                                       │
│        Initialize representation of restored  ⌐ 306   │
│                     image                             │
└─────────────────────────────────────────────────────┘
                         │
                         ▼
┌─────────────────────────────────────────────────────────────┐
│ Update representation of restored image to generate   ⌐ 308  │
│              final representation                            │
│   ┌─────────────────────────────────────────────────────┐   │
│   │                                                       │   │
│   │  Generate denoising output for updating      ⌐ 310   │   │
│   │              iteration                                │   │
│   └─────────────────────────────────────────────────────┘   │
│                         │                                    │
│                         ▼                                    │
│   ┌─────────────────────────────────────────────────────┐   │
│   │  Update representation of restored image     ⌐ 312   │   │
│   │         using denoising output                        │   │
│   └─────────────────────────────────────────────────────┘   │
│                                                              │
└─────────────────────────────────────────────────────────────┘
                         │
                         ▼
┌─────────────────────────────────────────────────────┐
│                                                       │
│     Generate restored image from final        ⌐ 314   │
│             representation                            │
└─────────────────────────────────────────────────────┘
```

FIG. 3

400

402

404 Restoration Prompt: "Deblur with sigma 0.4; Denoise with sigma 0.08..."

406 Semantic Prompt: "A very large giraffe eating leaves"

FIG. 4

500

"Remove all degradation" ⟋506

Restoration Prompt: "Deblur with sigma 0.4; Denoise with sigma 0.08..."

⟋502          ⟋540

| Degradation Pipeline |

Ground Truth *x*          *P*(skip)=0.5

⟋504

Input *y*

Semantic Prompt: "A very large giraffe eating leaves"

508

FIG. 5

600

| Method | Prompts | | Parameterized Degradation with synthesized $c_r$ | | | | | | Real-ESRGAN Degradation without $c_r$ | | | | | |
|---|---|---|---|---|---|---|---|---|---|---|---|---|---|---|
| | Sem | Res | FID↓ | LPIPS↓ | PSNR↑ | SSIM↑ | CLIP-I↑ | CLIP-T↑ | FID↓ | LPIPS↓ | PSNR↑ | SSIM↑ | CLIP-I↑ | CLIP-T↑ |
| SwinIR [25] | ✗ | ✗ | 43.22 | 0.423 | **24.40** | **0.717** | 0.856 | 0.285 | 48.37 | 0.449 | **23.45** | **0.699** | 0.842 | 0.284 |
| StableSR [60] | ✗ | ✗ | 20.55 | 0.313 | 21.03 | 0.613 | 0.886 | 0.298 | 25.75 | 0.364 | 20.42 | 0.581 | 0.864 | 0.298 |
| DiffBIR [29] | ✗ | ✗ | 17.26 | 0.302 | 22.16 | 0.604 | 0.912 | 0.297 | 19.17 | 0.330 | 21.48 | 0.587 | 0.898 | 0.298 |
| ControlNet-SR [71] | ✗ | ✗ | 13.65 | 0.222 | 23.75 | 0.669 | 0.938 | 0.300 | 16.99 | 0.269 | 22.95 | 0.628 | 0.924 | 0.299 |
| Ours w/o text | ✗ | ✗ | 12.70 | 0.221 | 23.84 | 0.671 | 0.939 | 0.299 | 16.25 | **0.262** | 23.15 | 0.636 | 0.929 | 0.300 |
| DiffBIR [29] + SDEdit [31] | ✓ | ✗ | 19.36 | 0.362 | 19.39 | 0.527 | 0.891 | 0.305 | 17.51 | 0.375 | 19.15 | 0.521 | 0.887 | **0.308** |
| DiffBIR [29] + CLIP [41] | ✓ | ✗ | 18.46 | 0.365 | 20.50 | 0.526 | 0.896 | **0.308** | 20.31 | 0.374 | 20.45 | 0.539 | 0.885 | 0.307 |
| ControlNet-SR + CLIP [41] | ✓ | ✗ | 13.00 | 0.241 | 23.18 | 0.648 | 0.937 | 0.307 | 15.16 | 0.286 | 22.45 | 0.610 | 0.926 | **0.308** |
| Ours | ✓ | ✓ | **11.34** | **0.219** | 23.61 | 0.665 | **0.943** | 0.306 | **14.42** | **0.262** | 23.14 | 0.633 | **0.935** | **0.308** |

FIG. 6

Europäisches
Patentamt

European
Patent Office

Office européen
des brevets

# EUROPEAN SEARCH REPORT

**Application Number**

EP 24 21 9195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jiang Yitong ET AL: "AutoDIR: Automatic All-in-One Image Restoration with Latent Diffusion" In: "Computer Vision - ECCV 2024 : 18th European Conference, Milan, Italy, September 29-October 4, 2024, Proceedings, Part XL", 2 December 2023 (2023-12-02), Springer Nature Switzerland, XP093271958, ISSN: 0302-9743 ISBN: 978-3-031-73661-2 vol. 15098, pages 340-359, DOI: 10.1007/978-3-031-73661-2_19, | 1-6,14, 15 | INV. G06T5/60 |
| A | * abstract * * figures 1,2 * * Section 3. * | 7-13 | |
| A | BROOKS TIM ET AL: "InstructPix2Pix: Learning to Follow Image Editing Instructions", ARXIV, [Online] 18 January 2023 (2023-01-18), pages 1-15, XP093227447, Retrieved from the Internet: URL:/https://arxiv.org/pdf/2211.09800> * abstract * * Section 3; figures 2,4 * | 1-15 | |
| T | Qi Chenyang ET AL: "TIP: Text-Driven Image Processing with Semantic and Restoration Instructions", , 18 December 2023 (2023-12-18), XP093272087, Retrieved from the Internet: URL:https://arxiv.org/abs/2312.11595v1 * the whole document * | | |

**TECHNICAL FIELDS SEARCHED (IPC)**

G06T

The present search report has been drawn up for all claims

| Place of search | Date of completion of the search | Examiner |
|---|---|---|
| Munich | 24 April 2025 | Salvador, Elena |

EPO FORM 1503 03.82 (P04C01)

**EP 4 571 634 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SALIMANS** ; **HO**. *arXiv: 2202.00512*, 2022
- **HO et al.** *arXiv:2006:11239*